# EUROPÄISCHE PATENTSCHRIFT

(11) **EP 3 446 895 B1**
(45) Veröffentlichungstag und Bekanntmachung des Hinweises auf die Patenterteilung: **04.03.2020**
(21) Anmeldenummer: 18172269.5
(22) Anmeldetag: 15.05.2018
(51) Int. Cl.: B60C 15/04, D07B 1/06

(54) **KABELKERN, GEEIGNET ALS WULSTKERN EINES FAHRZEUGREIFENS**
CABLE CORE, SUITABLE AS BEAD CORE OF A VEHICLE TYRE
NOYAU DU CÂBLE, APPROPRIÉ EN TANT QUE TRINGLE D'UN PNEU DE VÉHICULE

(30) Priorität: 21.08.2017 DE 102017214559
(43) Veröffentlichungstag der Anmeldung: 27.02.2019
(73) Patentinhaber: Continental Reifen Deutschland GmbH, 30165 Hannover (DE)
(72) Erfinder: Moura, Tiago, 30161 Hannover (DE); Kramer, Thomas, 32049 Herford (DE); Schunack, Michael, 30161 Hannover (DE); Heims, Florian, 30167 Hannover (DE)
(74) Vertreter: Finger, Karsten

(56) Entgegenhaltungen:
- WO-A1-2011/094146
- JP-A- H1 111 117
- JP-A- S5 351 804
- JP-A- 2014 004 900
- US-A- 4 887 655

## Beschreibung

Die Erfindung betrifft einen Kabelkern, geeignet als Wulstkern eines Fahrzeugreifens, wobei der Kabelkern ein Kernfilament aufweist, welches mit wenigstens drei Lagen aus Filamenten umhüllt ist, wobei die Filamente jeder dieser wenigstens drei Lagen eine bestimmte Anzahl an Verdrehungen um die jeweils darunter liegende Lage bzw. das darunter liegende Kernfilament aufweist, wobei die Filamente der ersten und der zweiten Lage die gleiche Anzahl an Verdrehungen aufweisen und dass die Filamente der dritten und gegebenenfalls weiteren Lage(n)eine gleiche oder niedrigere Anzahl an Verdrehungen aufweist, wobei die unmittelbar auf dem Kernfilament aufliegende Lage als erste Lage bezeichnet ist und die weiteren nach außen folgenden Lagen fortlaufend durchnummeriert sind.

Kabelkerne, welche als Wulstkerne in Fahrzeugreifen eingesetzt werden, sind dem Fachmann hinreichend bekannt. Um ein zentrales Kernfilament sind Lagen aus weiteren Filamenten angeordnet, wobei die Filamente einer jeden Lage parallel zueinander liegen und um die darunterliegende Lage spiralförmig verdreht bzw. herumgewunden sind. Die erste Lage, also diejenige Lage, die unmittelbar auf dem Kernfilament aufliegt, ist um dieses Kernfilament verdreht. Die Filamente einer Lage liegen eng aneinander. Es ist üblich, eine Anzahl an Verdrehungen der Filamente einer jeden Lage anzugeben. Diese Anzahl an Verdrehungen sind die Verdrehungen, welche über den gesamten Umfang des Kabelkernes auftreten. Die Verdrehungsanzahl 1 bedeutet eine komplette Windung von 360° über den gesamten Umfang des Kabelkernes. Sämtliche Filamente des Kabelkernes bestehen aus Stahl. Die Verdrehungsrichtung zweier unmittelbar aufeinander aufliegenden Lagen ist gegenläufig. Das bedeutet, dass die eine Lage S-verdreht und die andere Lage Z-verdreht ist oder vice verca. Somit liegen nie zwei richtungsgleich verdrehte Lagen unmittelbar aufeinander auf.

Ein Kabelkern der eingangs genannten Art ist beispielsweise aus der US 4 887 655 A bekannt. Der Kabelkern ist für einen Schwerlastreifen vorgesehen und weist gemäß einem Ausführungsbeispiel die Konstruktion 1x6,0 + (11+17+23+29) x2,2 auf.

Aus der EP 1 034 947 A2 ist ein Kabelkern bekannt, bei welchem die Anzahl der Verdrehungen der Filamentlagen von der ersten (innersten) Lage nach außen kontinuierlich oder stufenweise abnimmt, so dass die erste Lage die höchste Anzahl an Verdrehungen aufweist und die nach außen folgenden Filamentlagen jeweils eine niedrigere Anzahl an Verdrehungen aufweisen.

Der Erfindung liegt die Aufgabe zu Grunde, einen Kabelkern zur Verfügung zu stellen, welcher ein geringeres Gewicht aufweist und zudem kostengünstig herzustellen ist.

Die gestellte Aufgabe wird erfindungsgemäß dadurch gelöst, dass der Kabelkern die Konstruktion 1x5,0 + (10+16+22) x2,0 aufweist, wobei die Filamente der ersten Lage und die der zweiten Lage eine gleiche Anzahl an Verdrehungen von je 9 und die Filamente der dritten Lage eine Anzahl an Verdrehungen von 8 aufweist.

Die erste Lage, also die innerste Lage weist keine höhere Anzahl an Verdrehungen auf als die zweite Lage. Daher ist an Material und an Gewicht eingespart. Denn je höher die Anzahl an Verdrehungen, umso mehr Material wird hierfür benötigt und das Gewicht und die Kosten steigen. Zudem nimmt die Anzahl der Verdrehung bei den äußeren Lagen nicht zu, sondern ab, so dass zusätzlich an Gewicht eingespart ist.

Zudem ist dieser Kabelkern haltbarer, da durch die geringere Anzahl an Verdrehungen die Kontakte einer Lage zur benachbarten Lage geringer als bei einer höheren Anzahl an Verdrehungen sind, so dass Fretting-Effekte geringer sind.

Der Kabelkern gemäß der Erfindung weist somit einen Filamentkern mit einem Durchmesser von 5 mm auf, welcher von drei Lagen umhüllt ist, wobei jedes Filament der drei Lagen einen Durchmesser von 2,0 mm aufweist. Die erste und die zweite Lagen weisen eine Anzahl an Verdrehungen von je 9 auf, die dritte Lage weist eine niedrigere Anzahl an Verdrehungen von 8 auf.

Hierdurch wird der Zielkonflikt zwischen Preis und Prozessierbarkeit auf hohem Niveau gelöst. Filamente mit dünnerem Durchmesser wären schlechter zu verarbeiten.

Die Erfindung betrifft ebenfalls einen Fahrzeugluftreifen, welcher einen vorbeschriebenen Kabelkern als Wulstkern aufweist.

Der Fahrzeugreifen ist vorzugsweise ein Nutzfahrzeugreifen, ein Schwerlasttransportreifen, ein Flugzeugreifen oder ein Fahrzeugluftreifen mit Notlaufeigenschaften vorzugweise für PKW.

Weitere Merkmale, Vorteile und Einzelheiten der Erfindung werden nun anhand der Zeichnungen, welche schematisch ein Ausführungsbeispiel der Erfindung zeigen, näher erläutert. Dabei zeigen die
Fig. 1 eine perspektivische Ansicht auf einen Abschnitt des erfindungsgemäßen Kabelkernes, dessen Lagen zum Teil abgedeckt sind und
Fig. 2 einen Querschnitt durch den Kabelkern der Fig. 1.

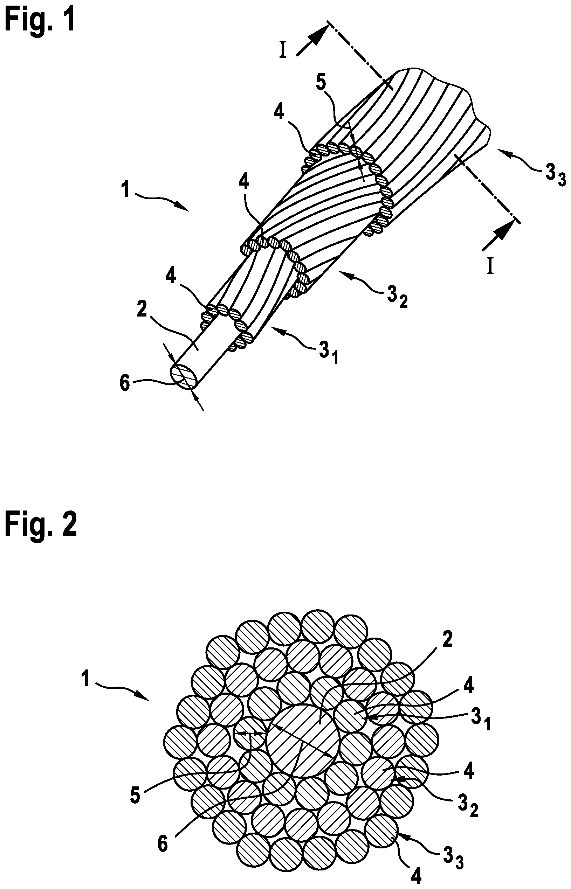

Die Fig. 1 zeigt eine perspektivische Ansicht auf einen Abschnitt des erfindungsgemäßen Kabelkernes 1, dessen Lagen 3₁, 3₂, 3₃ zum Teil abgedeckt sind. Der Kabelkern wird als Wulstkern eines Fahrzeugreifens verwendet. Die **Fig. 2** zeigt einen Querschnitt durch den Kabelkern der Fig.1 und wird zusammen mit der Fig. 1 nachfolgend beschrieben.

Der Kabelkern 1 weist ein Kernfilament 2 aus Stahl auf, welches mit drei Lagen 3₁, 3₂, 3₃ aus Filamenten 4 aus Stahl umhüllt ist. Die erste Lage besteht aus 10 Filamenten, die zweite Lage aus 16 Filamenten und die dritte Lage aus 22 Filamenten. Die unmittelbar auf dem Kernfilament 2 aufliegende Lage 3₁ ist als erste Lage bezeichnet, die weiteren nach außen folgenden Lagen sind fortlaufend durchnummeriert. Die Filamente 4 jeder dieser wenigstens drei Lagen 3₁, 3₂, 3₃ weisen eine bestimmte Anzahl an spiralförmigen Verdrehungen um die jeweils darunter liegende Lage 3_{1,2} bzw. das darunter liegende Kernfilament 2 auf.

Die Filamente 4 der ersten und der zweiten Lage 3₁, 3₂ weisen die gleiche Anzahl an Verdrehungen auf, hier 9 Verdrehungen. Die Filamente 4 der dritten Lage 3₃ weisen eine niedrigere Anzahl an Verdrehungen aufweist, hier 8. Die unmittelbar aufeinander aufliegenden Lagen sind gegenläufig verdreht.

Alle Filamente 4 der Lagen 3₁, 3₂, 3₃ weisen einen gleichen Durchmesser 5 von 2,0 mm auf. Das Kernfilament 2 weist einen Durchmesser 6 von 5,0 mm auf.

Der vorbeschriebene erfindungsgemäße Kabelkern 1 weist somit die Konstruktion 1x5,0 + (10+16+22)x2,0 auf, wobei die Filamente 4 der ersten Lage und die der zweiten Lage 3₁, 3₂ eine gleiche Anzahl an Verdrehungen von je 9 und die Filamente 4 der dritten Lage 3₃ eine geringere Anzahl an Verdrehungen von 8 aufweist.

### Bezugszeichenliste

- 1 ......................: Kabelkern
- 2 ......................: Kernfilament
- 3₁.....................: erste Filamentlage
- 3₂.....................: zweite Filamentlage
- 3₃.....................: dritte Filamentlage
- 4......................: Filament
- 5......................: Durchmesser Filament
- 6......................: Durchmesser Kernfilament

## Patentansprüche

1. Kabelkern (1), geeignet als Wulstkern eines Fahrzeugreifens, wobei der Kabelkern (1) ein Kernfilament (2) aufweist, welches mit wenigstens drei Lagen (3₁, 3₂, 3₃) aus Filamenten (4) umhüllt ist, wobei die Filamente (4) jeder dieser wenigstens drei Lagen (3₁, 3₂, 3₃) eine bestimmte Anzahl an Verdrehungen um die jeweils darunter liegende Lage bzw. das darunter liegende Kernfilament (2) aufweist,
wobei die Filamente (4) der ersten und der zweiten Lage (3₁, 3₂) die gleiche Anzahl an Verdrehungen aufweisen und dass die Filamente (4) der dritten und gegebenenfalls weiteren Lage(n) (33)eine gleiche oder niedrigere Anzahl an Verdrehungen aufweist, wobei die unmittelbar auf dem Kernfilament (2) aufliegende Lage (3₁) als erste Lage bezeichnet ist und die weiteren nach außen folgenden Lagen fortlaufend durchnummeriert sind,
**dadurch gekennzeichnet,**
**dass** der Kabelkern (1) die Konstruktion 1x5,0 + (10+16+22) x2,0 aufweist, wobei die Filamente (4) der ersten Lage und die der zweiten Lage (3₁, 3₂) eine gleiche Anzahl an Verdrehungen von je 9 und die Filamente (4) der dritten Lage (3₃) eine Anzahl an Verdrehungen von 8 aufweist.

2. Fahrzeugluftreifen, **dadurch gekennzeichnet, dass** dieser einen Kabelkern (1) nach Anspruch 1 aufweist.

3. Fahrzeugluftreifen nach Anspruch 2, **dadurch gekennzeichnet, dass** dieser eine Größe in einem Bereich von 16 bis 30 Zoll, bevorzugt in einem Bereich von 20 bis 30 Zoll, besonders bevorzugt in einem Bereich von 24 bis 30 Zoll und ganz besonders bevorzugt 27 Zoll aufweist.

4. Fahrzeugluftreifen nach Anspruch 3, **dadurch gekennzeichnet, dass** dieser ein Nutzfahrzeugreifen, ein Schwerlasttransporterreifen, ein Flugzeugreifen oder ein Fahrzeugluftreifen mit Notlaufeigenschaften ist.

## Claims

1. Cable core (1), suitable as a bead core of a pneumatic vehicle tyre, the cable core (1) having a core filament (2), which is sheathed by at least three plies (3₁, 3₂, 3₃) comprising filaments (4), the filaments (4) of each of these at least three plies (3₁, 3₂, 3₃) having a specific number of turns about the ply lying respectively thereunder or the core filament (2) lying thereunder, the filaments (4) of the first and second plies (3₁, 3₂) having the same number of turns and that the filaments (4) of the third and possibly further ply/plies (3₃) have an equal or lower number of turns, the ply (3₁) that lies directly on the core filament (2) being referred to as the first ply and the further plies, following in the outward direction, being consecutively numbered in series,
**characterized**
**in that** the cable core (1) has the construction 1×5.0+(10+16+22)×2.0, the filaments (4) of the first ply and those of the second ply (3₁, 3₂) having an equal number of turns of nine each, and the filaments (4) of the third ply (3₃) having a number of turns of eight.

2. Pneumatic vehicle tyre, **characterized in that** it has a cable core (1) according to Claim 1.

3. Pneumatic vehicle tyre according to Claim 2, **characterized in that** it has a size in a range from 16 to 30 inches, preferably in a range from 20 to 30 inches, particularly preferably in a range from 24 to 30 inches and most particularly preferably 27 inches.

4. Pneumatic vehicle tyre according to Claim 3, **characterized in that** it is a commercial vehicle tyre, a heavy transporter tyre, an aircraft tyre or a pneumatic vehicle tyre with runflat properties.

## Revendications

1. Âme de câble (1), appropriée comme âme de talon d'un pneumatique de véhicule, l'âme de câble (1) comportant un filament d'âme (2) qui est recouvert d'au moins trois couches (3₁, 3₂, 3₃) de filaments (4), les filaments (4) de chacune de ces au moins trois couches (3₁, 3₂, 3₃) comportant un certain nombre de torsions autour de la couche sous-jacente respective ou du filament d'âme sous-jacent (2), les filaments (4) des première et deuxième couches (3₁, 3₂) comportant le même nombre de torsions et que les filaments (4) de la troisième et éventuellement d'autres couches (3₃) ont le même nombre de torsions ou moins, la couche (3₁) reposant directement sur le filament d'âme (2) étant appelée première couche et les autres couches qui suivent vers l'extérieur étant numérotées consécutivement,
**caractérisée en ce que**
l'âme de câble (1) a la construction 1x5,0 + (10+16+22)x2,0, les filaments (4) de la première couche et de la deuxième couche (3₁, 3₂) ayant un même nombre de torsions de 9 chacun et les filaments (4) de la troisième couche (3₃) ayant un nombre de torsions de 8.

2. Pneumatique de véhicule, **caractérisé en ce qu'**il comporte une âme de câble (1) selon la revendication 1.

3. Pneumatique de véhicule selon la revendication 2, **caractérisé en ce qu'**il a une dimension dans une plage de 16 à 30 pouces, de préférence dans une plage de 20 à 30 pouces, de manière particulièrement préférée dans une plage de 24 à 30 pouces et de manière tout particulièrement préférée de 27 pouces.

4. Pneumatique de véhicule selon la revendication 3, **caractérisé en ce que** celui-ci est un pneumatique de véhicule utilitaire, un pneumatique de transporteur de charges lourdes, un pneumatique d'avion ou un pneumatique de véhicule ayant des propriétés de roulement d'urgence.
